(19)

Europäisches Patentamt
European Patent Office
Office européen des brevets

(11) **EP 2 687 969 A2**

(12) **EUROPEAN PATENT APPLICATION**

(43) Date of publication:
**22.01.2014 Bulletin 2014/04**

(51) Int Cl.:
*G06F 3/0488* (2013.01)    *H04N 5/783* (2006.01)
*H04N 21/44* (2011.01)

(21) Application number: **13003523.1**

(22) Date of filing: **12.07.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **16.07.2012 CN 201210246563**
**23.05.2013 KR 20130058380**

(71) Applicant: **Samsung Electronics Co., Ltd**
**Gyeonggi-do 443-742 (KR)**

(72) Inventors:
• **Yu, Guitao**
**210019 Nanjing (CN)**
• **Ji, Bing**
**210019 Nanjing (CN)**
• **Zhu, Chumbo**
**210019 Nanjing (CN)**

(74) Representative: **Brandon, Paul Laurence**
**Appleyard Lees**
**15 Clare Road**
**Halifax, HX1 2HY (GB)**

(54) **Electronic apparatus and control method of the same**

(57)    Provided are an electronic apparatus based on touch control and a method for using the apparatus. The apparatus comprises a touch sensing module for receiving touch input from a user and generating a touch signal; an indexer for storing an index list of time information and offset information of video frames of video data; and a controller for determining a video frame localization mode according to touch velocity, touch length and touch direction of the touch input, calculating time information of a video frame to be displayed and a frame rate, and outputting control signals of a pusher, a decoder and a frame buffer controller.

## FIG. 1

**Description**

CROSS-REFERENCE TO RELATED APPLICATIONS

This application claims priority from Chinese Patent Application No. 201210246583.X, filed on July 16, 2012 in the State Intellectual Property Office of the People's Republic of China, and Korean Patent Application No. 10-2013-0058380, filed on May 23, 2013 in the Korean Intellectual Property Office, the disclosures of which are incorporated herein by reference in their entireties.

BACKGROUND

**1. Field**

Exemplary embodiments relate to an electronic apparatus and control method thereof,and in particular, to an electronic apparatus used for video localization based on touch control and the control method thereof.

**2. Description of the Related Art**

In recent technology relating to video playback, control of video playback has generally been implemented by providing a remote controller with buttons. A conventional digital versatile disk (DVD) player or a conventional remote controller of a television generally includes various buttons, such as, for example, buttons for play, stop, pause, fast forward, fast rewind, slow forward, slow rewind, etc., in order to meet the requirements of a typical user. As remote controllerswith a touch screen and electronic apparatus with a touch screen become popular, there is a need for developing a technique for quickly locating a video frame based on touch control. For a common handheld multimedia apparatus with a touch screen, two manners of localization for video frames are provided: (1) dragging a slider in an interface for video playback to a specific time point, and then locating the video frame at a specific time point; and (2) generating thumbnails with a time interval on the whole time axis, touching a specific thumbnail from among the generated thumbnails, generating a thumbnail sequence of video frames with finer particles centered at the specific thumbnail, and locating one thumbnail of video frame from among the thumbnail sequence.

However, in the conventional devices, the technical solution of video localization based on touch control does not completely take advantage of the touch screen, in the regard that the touch screen is able to sense a velocity and a length of a touch operation on the touch screen. Accordingly, converting a touch signal into a control signal is essential for further development of User Interfaces (UI) and video control technique. A common solution which has been implemented in some conventional device includesgenerallydisplaying various control keys and a progress bar in a Graphical User Interface (GUI), and then a user clicks or dragsa controller to control the video. However, this solution does not utilize the velocity information which relates to the touch operation, and moreover, the touch point is fixed, which reduces the user-friendliness of the conventional UI.

SUMMARY

One or more exemplary embodiments may overcome the above disadvantages and other disadvantages not described above. In one or more exemplary embodiments, an apparatus obtains a length and a velocity of a touch operation as well as a direction of the touch operation on the touch screen, and dynamically changes the mode of video playback based on a current state of video playback and emotion factors manifested in the touch operation of user, so as to quickly locate an area of interest of the video. To achieve this goal, the apparatus according to one or more exemplary embodiments calculates a video frame sequence to be displayed after receiving a touch signal, acquires a file offset of a related frame by checking information which relates to an index list of video frames, then transfers the video frame data to a decoder, and then the video frame data which has been decoded by the decoder is transferred to a frame buffer controller to be displayed at a predetermined frame rate.

According to an aspect of an exemplary embodiment, there is provided an electronic apparatus based on touch control, including: a touch sensor which is configured to receive a touch input from a user and to generate a touch signal based on the received touch input; a storage which is configured to store an index list which includes time information and offset information which relates to video frames of video data; and a controller which is configured to  control to determine a video frame localization mode based on at least one of a touch velocity, a touch length, and a touch direction of the received touch input, to calculate time information which relates to a video frame to be displayed, to set a frame rate which relates to acquiring offset information which relates to the video frame to be displayed based on the calculated time information and the stored index list, and to decode video frame data based on the acquired offset information in order to display the decoded video frame based on the calculated time information and the set frame rate.

According to an aspect of one or more exemplary embodiments, the electronic apparatus may further include: a pusher which is configured to acquire the offset information of the video frame to be displayed based on the calculated time information and the stored index list, to read the video frame data based on the acquired offset information, and to push the read video frame data to a decoder, the decoder which is configured to maintain a buffer queue which includes the received video frame data, to decode the video frame data which is included in the buffer queue, and to push the decoded video frame data to a frame buffer controller; and the frame buffer controller which is configured to store the decoded video frame data, and to determine a time for displaying a current video frame based on time information which relates to the current video frame and the set frame rate.

According to an aspect of one or more exemplary embodiments, the video frame localization mode may include at least one of a fast forward mode with damping effect, a fast rewind mode with damping mode, and a frame-by-frame searching mode.

According to an aspect of one or more exemplary embodiments, the pusher may be further configured to generate a respective push thread which relates to video frame data for each received touch input, and to selectively push video frame data to the decoder.

According to an aspect of one or more exemplary embodiments, the decoder may be further configured to selectively decode the video frame data which is received from the pusher.

According to an aspect of one or more exemplary embodiments, the frame buffer controller may be further configured to filter video frame data which includes at least one temporal discontinuity.

According to an aspect of one or more exemplary embodiments, in a fast forward mode, the controller may be further configured to set an operation mode of the electronic apparatus as a keyframe-only mode in which only keyframes from among a Group Of Pictures (GOP) are decoded, and when in said keyframe-only mode, the controller may be further configured to set the frame rate as a fixed value, and to calculate time point of a respective keyframe to be displayed on the screen according to the following equations:

$$N = nTouchLength / nTouchVelocity$$

$$X_{n=1...N} = X_{n-1} + (N - n) \times nTouchVelocity \times nTouchWeight$$

wherein nTouchvelocity denotes the touch velocity, nTouchLength denotes the touch length, nTouchWeight denotes a weight which relates to adjusting a touch control, $X_{n=1...n}$ denotes an nth time point, an $X_0$ denotes an initial time point when the fast forward operation begins.

According to an aspect of one or more exemplary embodiments, in a fast forward mode, the controller may be further configured to set an operation mode of the electronic apparatus as a full decoding mode in which all of the frames from among a GOP are decoded, and to set the frame rate according to the following equations:

$$StartRateFull_n = FR \times (1 + \frac{n}{N})$$

$$EndRateFull_n = FR \times (2 - \frac{n}{N})$$

wherein the StartRateFulln denotes the frame rate when a touch operation begins, the $EndRateFull_n$ denotes the frame rate when the touch operation ends, FR denotes the frame rate of normal playback, and N denotes a number of frames which have a damping effect in the full decoding mode.

According to an aspect of one or more exemplary embodiments, in a frame-by-frame searching mode, if the video frame localization mode is determined to include a frame-by-frame forwarding operation, the controller may be further configured to control the number of frames to be stored in the frame buffer controller to be set to a fixed value, and if the video frame localization mode is determined to include a frame-by-frame rewind operation, the controller may be further configured to control the number of frames to be stored in the frame buffer controller to be set based on a number of all of the frames in a GOP.

According to an aspect of one or more exemplary embodiments, if the controller determines that a condition (Icount+Pcount+1)*Iresolution<FrameBufferSize is not satisfied, the controller may be further configured to control the decoder to decode as many video frames in a GOP as possible, wherein Icount denotes a number of Intra-coded (I) frames in a GOP, and Pcount denotes the number of predicted (P) frames in the GOP, and '1' denotes the number of bidirectionally predicted (B) frames. Further, Iresolution denotes a resolution of an I frame, and FrameBufferSize denotes a memory size of the frame buffer controller.

According to another aspect of one or more exemplary embodiments, there is provided a touch control based-control method which is executable by using an electronic apparatus, including:(a) receiving a touch input from a user and generating a touch signal based on the received touch input; (b) determining a video frame localization mode based on at least one of a touch velocity, a touch length, and a touch direction of the received touch input, calculating time information which relates to a video frame to be displayed and setting a frame rate; (c) acquiring offset information which relates to the video frame based on an index list, reading video frame data based on the acquired offset information, and pushing the read video frame data to a buffer; (d) maintaining, in the buffer, a buffer queue which includes the received video frame data, and decoding the video frame data which is included in the buffer queue; (e) storing the decoded video frame data, and determining a time for displaying a current video frame based on time information which relates to the current video frame and the set frame rate.

According to another aspect of one or more exemplary embodiments, the video frame localization mode may includeat least one of a fast forward mode with damping effect, a fast rewind mode with damping mode, and a frame-by-frame searching mode.

According to another aspect of one or more exemplary embodiments, in operation (c), a respective push thread which relates to video frame data may be generated for each received touch input, and video frame data may be selectively pushed to the decoder.

According to another aspect of one or more exemplary embodiments, in operation (d), the video frame data pushed In operation (c) may be selectively decoded.

According to another aspect of one or more exemplary embodiments, operation (e) may include filtering video frame data which includes at least one temporal discontinuity.

According to another aspect of one or more exemplary embodiments, if a fast forward mode is determined in operation (b), the frame rate may be set as a fixed value and only keyframes from among a GOP may be decoded in operation (d), and a time point of a respective keyframe to be displayed on the screen may be calculated according to the following equations: $N = nTouchLength/nTouchVelocity,$

$$X_{n=1...N} = X_{n-1} + (N - n) \times nTouchVelocity \times nTouchWeight,$$

wherein nTouchvelocity denotes the touch velocity, nTouchLength denotes the touch length, nTouchWeight denotes a weight which relates to adjusting a touch control, $X_{n=1...n}$ denotes an nth time point, and $X_0$ denotes an initial time point when the fast forward operation begins.

According to another aspect of one or more exemplary embodiments, in a fast forward mode, the frame rate may be set as a variable value in operation (b) and all of the frames from among a GOP may be decoded in operation (d), wherein the frame rate is set according to the following equations:

$$StartRateFull_n = FR \times (1 + \frac{n}{N}),$$

$$EndRateFull_n = FR \times (2 - \frac{n}{N}),$$

wherein the StartRateFulln denotes the frame rate when a touch operation begins, the EndRataFull$_n$ denotes the frame

rate when the touch operation ends, FR denotes the frame rate of normal playback, and N denotes a number of frames which have a damping effect in the full decoding mode.

According to another aspect of one or more exemplary embodiments, if the video frame localization mode is determined to include a frame-by-frame forwarding operation, the number of frames that are buffered may be controlled to be set to a preset number, and the number of buffered frames may be controlled to be set based on a number of all of frames in a GOP, if the video frame localization mode is determined to include a frame-by-frame rewind operation.

According to another aspect of one or more exemplary embodiments, if the video frame localization mode is determined to include a fast rewind mode, and if a condition (Icount+Pcount+1)*Iresolution<FrameBufferSize is not satisfied, as many video frames of a GOP as possible may be decoded in operation (d), wherein Icount denotes the number of I frames in a GOP, and Pcount denotes the number of P frames in the GOP, and '1' denotes the number of B frames. Further, Iresolution denotes the resolution of I frame, and FrameBufferSize denotes the memory size of frame buffer controller.

BRIEF DESCRIPTION OF THE DRAWINGS

The above and/or other aspects will be more apparent by describing in detail exemplary embodiments, with reference to the accompanying drawings, in which:

FIG. 1 is a block diagram which Illustrates a touch control - based electronic apparatus, according to an exemplary embodiment;

FIG. 2 is a flowchart which illustrates a fast forward mode with damping effect of an electronic apparatus based on touch control, according to an exemplary embodiment;

FIG. 3 illustrates a video frame sequence in the fast forward mode with damping effect of an electronic apparatus based on touch control, according to an exemplary embodiment;

FIG. 4 illustrates a video frame sequence in a fast rewind mode with damping effect of an electronic apparatus based on touch control, according to an exemplary embodiment;

FIG. 5 illustrates a frame sequence of a Group of Picture (GOP) in a reverse full decoding mode, according to an exemplary embodiment;

FIG. 6 illustrates a video frame sequence in a frame-by-frame mode of an electronic apparatus based on touch control, according to an exemplary embodiment;

FIG. 7 illustrates a rule for video frame substitution in the frame-by-frame mode of an electronic apparatus based on touch control, according to an exemplary embodiment; and

FIG. 8 illustrates a flowchart of the frame-by-frame mode of an electronic apparatus based on touch control, according to an exemplary embodiment.

DETAILED DESCRIPTION OF THE EXEMPLARY EMBODIMENTS

Hereinafter, exemplary embodiments will be described in greater detail with reference to the accompanying drawings. The following exemplary embodiments are merely illustrative, and many other alternative embodiments are also possible according to the present inventive concept.

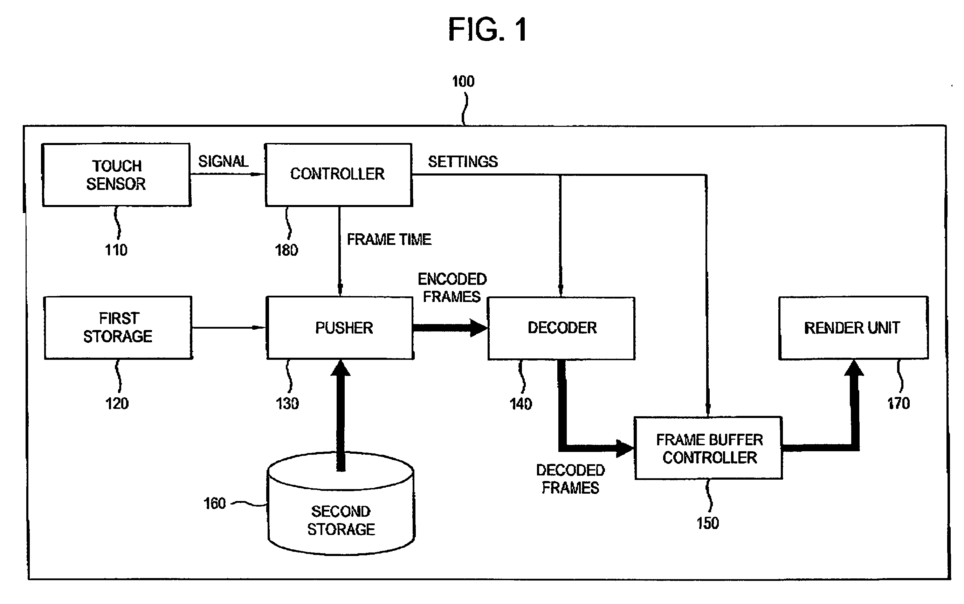

Referring to FIG. 1, according to an exemplary embodiment, an electronic apparatus 100 includes a touch sensor 110, a first storage 120, a pusher 130, a decoder 140, a frame buffer controller 150, a second storage 160, a renderer 170, and a controller 180.

The touch sensor 110 may be typically classified into two types. A first type includes a touch screen of an electronic apparatus in which a display function and a touch screen function are integrated, such as, for example, a touch screen of a cell phone, a music player, television (TV), or the like. A second type includes only a touch sensor, such as, for example, a touch pad of a Personal Computer (PC), a touch-based remoter controller of a television, or the like. The touch sensor 110 senses the touch operation of a user and generates a touch signal based on the sensed touch operation, and then transmits the touch signal to the controller 180. Herein, the touch signal generally includes information relating to at least one of atouch velocity, a touch length, and a touch direction of the touch operation. The controller 180 may determine a mode in which the user wants to locate a video based on at least one of the touch velocity, the touch length, and the touch direction of the touch operation, and may calculate time information and set a frame rate of video frames to be displayed. Herein, according to one or more exemplary embodiments, a fast forward mode with damping effect, a fast rewind mode with damping effect and a frame-by-frame mode may be achieved. The time Information may include a time stamp of a video frame.

The first storage 120 stores an index list which includes time Information and offset information which relates to video frames of video data. Due to a requirement of high performance for fast video localization, there must be an index list of corresponding keyframes of the video data that is to be located by the electronic apparatus. As such, offset information which relates to key frames corresponding to the time information may be quickly acquired via the index list which is stored in the first storage 120.

The controller 180 calculates the time information and sets the frame rate with respect to video frames to be displayed, and transmits the time information to the pusher 130. The pusher 130 retrieves the offset information which relates to video frames corresponding to the time stamp from the stored index list, reads corresponding video frame data from the second storage 160 based on the retrieved offset information, and then pushes the read video frame data to the decoder 140. With respect to a touch operation performed by a user which slides the touch screen, the pusher 130 generates a push thread, such that data flow distinguished by each touch operation may be selectively pushed to the decoder 140. Before the video frame data is pushed to the decoder 140, the pusher 130 may discard a part of the video frame data, which does not need to be pushed to the decoder 140, according to a rule of smooth transition (i.e., whether or not the video frame data Includes at least one temporal discontinuity). When the search procedure for video localization ends, the pusher 130 returns to a push mode for normal playback.

The decoder 140 maintains a buffer queue which includes video frame data to be decoded, decodes the video frame data which is included in the buffer queue, and transmits the decoded video frame data to the frame buffer controller 150. The basic unit of the video frame data in the buffer queue is a Group Of Pictures (GOP). The GOP may include only data which relates to one keyframe, or alternatively, may include data which relates to the entire GOP. The buffer queue may include video data which is directed to each push thread to be decoded. The decoder 140 may control a decoding rate, so as to ensure that the video frame data is not decoded at a rate which is less than the decoding rate of maximum decoding performance, and meanwhile the decoded video frame data can meet the requirement for video localization and display without interruption. The decoder 140 may be configured to ensure that the decoded video frame data will not be discarded by the frame buffer controller 150. Conversely, if there is an excessive amount of decoded video frame data, a large amount of memory resource will be consumed and the reaction speed of the decoder 140 will be lowered. In particular, the decoder 140 selectively decodes the video frame data pushed by the pusher 130 based on a rule for smooth transition, such that video frame data which includes at least one temporal discontinuity may not be decoded.

The frame buffer controller 150 determines the time when a current video frame is to be displayed based on the time information and frame rate of the current video frame, which are calculated by the controller 180, in comparison with system time and based on the rule for smooth transition. The frame buffer controller 150 may discard video frame data which has been decoded but which does not follow the rule for smooth transition.

The controller 180 may also output control information in order to control the operations of the pusher 130, the decoder 140, and the frame buffer controller 150, except for the operations of calculating the time information and setting the frame rate of video frame to be displayed. For example, control information output to the pusher 130 may include information which relates to keyframes and information indicating whether a touch operation is a new touch operation; the control information output to the decoder 140 may include information which relates to indicating a decoding mode and a start/stop timing for performing a decoding operation; control information output to the frame buffer controller 150 may include information which relates to the rate of displaying video frame, a display mode, a length of forward step in a frame-by-frame full decoding mode, and/or any other suitable type of information.

The second storage 160 is used to store the video data. The renderer 170 is used to render video data. The second storage 160 and the renderer 170 according to one or more exemplary embodiments may be implemented as any conventional storage unit or storage device and any conventional render unit or rendering device. Further, it is understood that, although the storage and the renderer are implemented in the same device together with other components of the electronic apparatus in the present exemplary embodiment, they may be implemented separately from the electronic apparatus.

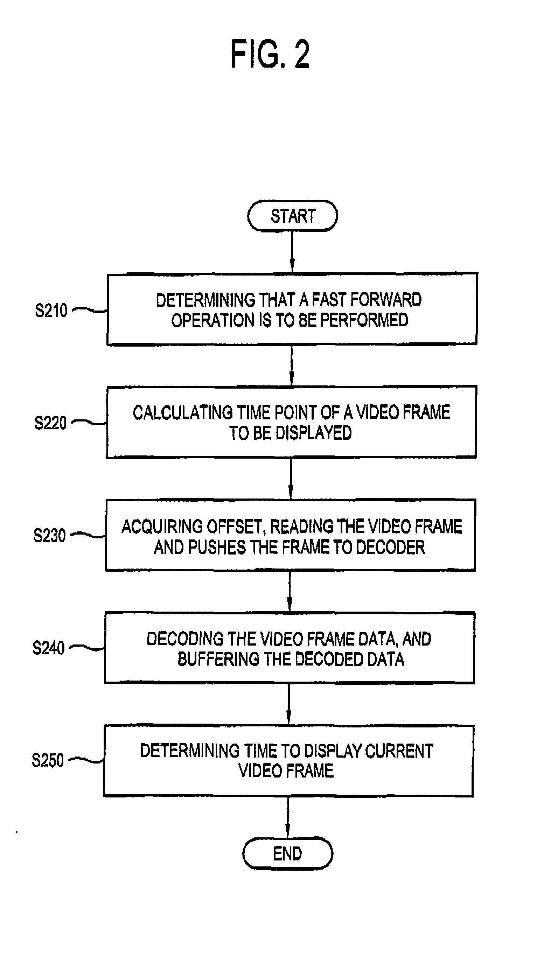

Hereinafter, an operation method which is executable by using the electronic apparatus according to the present exemplary embodiment will be described In detail with reference to FIGS.2, 3, 4, 5, and 6. Three modes of video localization, i.e., fast forward with damping effect, fast rewind with damping effect and frame-by-frame searching, are described in the following description. However, it is understood that the present inventive concept is not limited to these three modes.

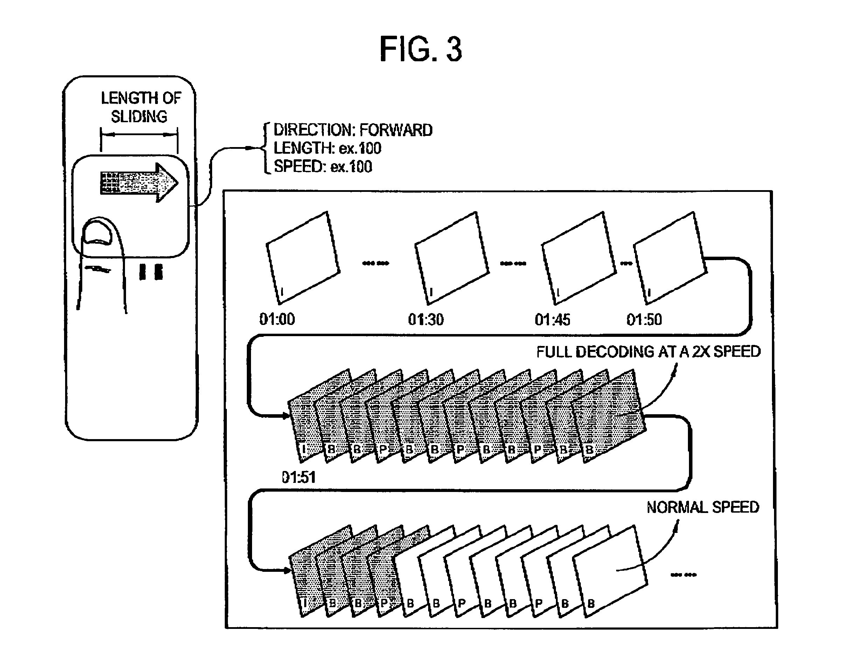

FIG. 2 is a flowchart which illustrates a fast forward mode with damping effect of a method for video localization which is executable by using the electronic apparatus based on touch control according to an exemplary embodiment, and FIG. 3 illustrates a video frame sequence in the fast forward mode with damping effect of a method for video localization which is executable by using the electronic apparatus based on touch control, according to an exemplary embodiment.

When the user continually sweeps on a touch screen or a touch pad, the touch sensor 110 continually generates touch signals, each touch signal includes three values, i.e., a touch velocity value, a touch length value, and a touch direction value. In the present exemplary embodiment, in operation S210, when the user continually slides in the rightward direction on the touch screen, the controller 180 may determine that the user wants to perform a fast forward operation based on the touch signals which are received from the touch sensor 110. Then, at operation S220, the controller 180 calculates a time point of video frame to be displayed on the screen. In the start phase of fast forward, only keyframes may be displayed. The time point of a keyframe may be calculated based on the following Equations 1 and 2.

$$N = nTouchLength / nTouchVelocity, \quad \text{Equation 1}$$

$$X_{n=1...N} = X_{n-1} + (N - n) \times nTouchVelocity \times nTouchWeight \quad \text{Equation 2}$$

In Equations 1 and 2, nTouchvelocity denotes touch velocity, nTouchLength denotes touch length, and nTouch-Weight denotes a weight which relates to adjusting touch controlling, which is used to control a step length of a touch operation. According to an exemplary embodiment, before a fast forward operation is initiated, the user may press on the touch screen and move upward or downward in order to adjust the weight for touch controlling, and the adjusted value of the weight may affect the speed of the fast forward operation. As such, if a video which has a relatively long duration is fast forwarded, a switch between global search and local search can be achieved by variably setting nTouch-Weight. In Equation 1, N denotes the number of frames to be displayed on the screen. In Equation 2, $X_{n=1...n}$ denotes an nth time point, wherein X0 denotes an initial time point when the fast forward operation begins. As illustrated in FIG. 3, respective time points for each of a first, second, third, and fourth keyframe are 01:00, 01:30, 01:45, and 01:50 respectively, and 16 frames (illustrated in shadow) from the time point of 01:51 are fully decoded at a speed of two times of a normal speed (i.e., a 2x speed). After this, frames are decoded at normal speed. In this manner, a fast forward with damping effect can be achieved. In particular, the damping effect can be achieved by extracting specific video frames from among the complete sequence of video frames.

Further, when the controller 180 receives signals indicating consecutive, high frequency fast forward operations, this means that the user wants to skip a segment of video. Then the controller 180 may increase the step length of Xn in order to increase a time period that can be skipped by each touch operation. This goal can be achieved by adjusting the nTouchWeight.

Next, after the controller 180 calculates the time point of video frame to be displayed, the time information which relates to video frame is transmitted to the pusher 130 in operation S230, such that the pusher 130 acquires offset information which relates to the video frame based on the stored index list, reads video frame data based on the acquired offset information, and pushes the read video frame data to the decoder 140. Herein, the pusher 130 firstly clears the data in the full decoding buffer (not shown) for normal playback, and then generates a new thread, from which the decoder 140 acquires the data to be decoded. The new thread transfers the time information which relates to the frame to the first storage 120, and the first storage 120 returns an offset of the frame and the size of the frame. The above operations can be expressed by the following Equations 3 and 4.

$$FrameOffset = Foffset(Xn) \quad \text{Equation 3}$$

$$FrameSize = Fsize(Xn) \quad \text{Equation 4}$$

The FrameOffset denotes the offset of the video frame in a file, and the FrameSize denotes the size of the video frame. The detailed algorithm may depend on how the keyframes are stored in the first storage 120. When the pusher 130 acquires video frame data, the pusher 130 places the data into a frame data list which is maintained by the new thread. When the decoder 140 requires data, the decoder 140 extracts a frame from the new thread.

Then, in operation S240, the decoder 140 decodes the video frame data and places the decoded video frame data into the frame buffer controller 150. Each slide operation corresponds to a new thread, and each new thread maintains a corresponding list of buffered frame data. The decoded frame data is deleted from the list, such that data to be decoded next by the decoder 140 is located at the top of each list. When the decoder 140 determines that there are two or more lists, the decoder 140 compares the time points of respective frames which are located at the top of each list. Generally, the time point of a sliding operation which corresponds to a previous list is earlier than the time point of a sliding operation which corresponds to a later list. If the decoder 140 determines that the time point of a video frame at the top of the later list is earlier than the time point of a video frame of a previous list, the decoder 140 reads data which relates to the later list and informs the pusher 130 to delete the data which relates to the previous list, so as to ensure that the video frames at later time points will not be displayed prior to the video frames which correspond to earlier time points. When all of the keyframes of the fast forward mode are decoded, the pusher 130 returns to the push made of normal playback.

Finally, in operation S250, the frame buffer controller 150 stores the decoded video frame data, and determines the time for displaying the current video frame based on the time information which relates to the current video frame and the frame rate. The frame buffer controller 150 may discard video frames that are already decoded but not follow the rule for smooth transition.

In particular, the decoder 140 pushes the decoded video frame data to the frame buffer controller 150. The frame buffer controller 150 maintains a queue which includes decoded video frames which are marked by a Program Time Stamp (PTS). If the intervals between frames of the queue become large, and the minimum interval between frames is less than the maximum frame interval, the frame buffer controller 150 deletes a later frame from among the frames having the minimum interval. After deleting, if there are still video frames which have a too small interval, the video frames are further deleted. By doing this, the intervals between frames are made smooth. Deleting can be expressed as shown below in Equation 5:

$$Inter_x = F_x - F_{x-1} < \frac{1}{2} \max_{n=1...N} (F_n - F_{n-1})$$

$$Inter_x = F_x - F_{x-1} < \frac{1}{2} \max_{n=1...N} (F_n - F_{n-1}) \quad \text{Equation 5}$$

In Equation 5, Fx denotes the PTS of a frame whose sequential number is x, and interx denotes an interval between a frame whose sequential number is x and a frame prior to the frame whose sequential number is x. The video localization device according to an exemplary embodiment may operate in two modes, i.e., a mode in which only intra-coded (I) frames are decoded (i.e., an I frame decoding mode) and a mode in which all frames are decoded (i.e., a full decoding mode). The controller 180 sets an operation mode as one of these two modes. In the I frame decoding mode, the frame rate may be set as a fixed value, and the damping effect may be achieved by varying the intervals between frames, as expressed by the following Equation 6:

$$RateI = 6 \quad \text{Equation 6}$$

In Equation 6, RateI denotes a frame rate of keyframes. The value "6" is only an example, and other values may be used as a frame rate of keyframes.

Next, when the operational mode switches from the I frame decoding mode to the full decoding mode, the first GOP and potentially more frames are fully decoded at a 2x speed. A damping effect may be achieved by setting the frame rate of the frame buffer controller 150. In particular, in the full decoding mode, the frame rate may be variably set in order to achieve smooth transition (i.e., avoid temporal discontinuities), as expressed by the following Equations 7 and 8:

$$StartRateFull_n = FR \times (1 + \frac{n}{N})$$

$$StartRateFull_n = 29.97 \times (1 + \frac{n}{N}) \quad \text{Equation 7}$$

$$EndRateFull_n = 29.97 \times (2 - \frac{n}{N}) \quad \text{Equation 8}$$

In Equations 7 and 8, StartRateFulln and EndRateFull$_n$ denote a frame rate at the start of a touch operation and a frame rate at the end of the touch operation, respectively, and FR denotes a normal frame rate. As shown in Equations 7 and 8, assuming that the normal frame rate is 29.97 and N denotes a number of decoded frames in the full decoding mode, it can be seen that the variable frame rate decreases gradually and becomes close to the normal frame rate. In the procedure of normal playback mode switches to the fast forward mode, a large number of frames which have not been displayed are stored in the frame buffer controller 150. in order to ensure a smooth transition and for compatibility with the frame-by-frame mode, as shown in Equations 7 and 8, assuming that the normal frame rate is 29.97 and N denotes a number of decoded frames in the full decoding mode, it can be seen that the variable frame rate increases gradually and becomes close to the frame rate of 2x speed. The reason why the above-described process is compatible with the frame-by-frame mode is: there is a period of time between the start of the touch operation and the end of the touch operation, and there is uncertainty as to whether a fast forward mode or a frame-by-frame mode will be used during the period of time. The above-described process for gradually increasing the frame rate can quickly return to the frame-by-frame mode when the prediction fails. In the case that the hardware does not support smooth transition, only a fast forward mode of 2x speed and a normal playback mode are provided.

It should be understood that the above description only provides an exemplary embodiment for achieving damping effect, and a persons skilled in the art can adopt other algorithms in order to achieve a fast forward with damping effect.

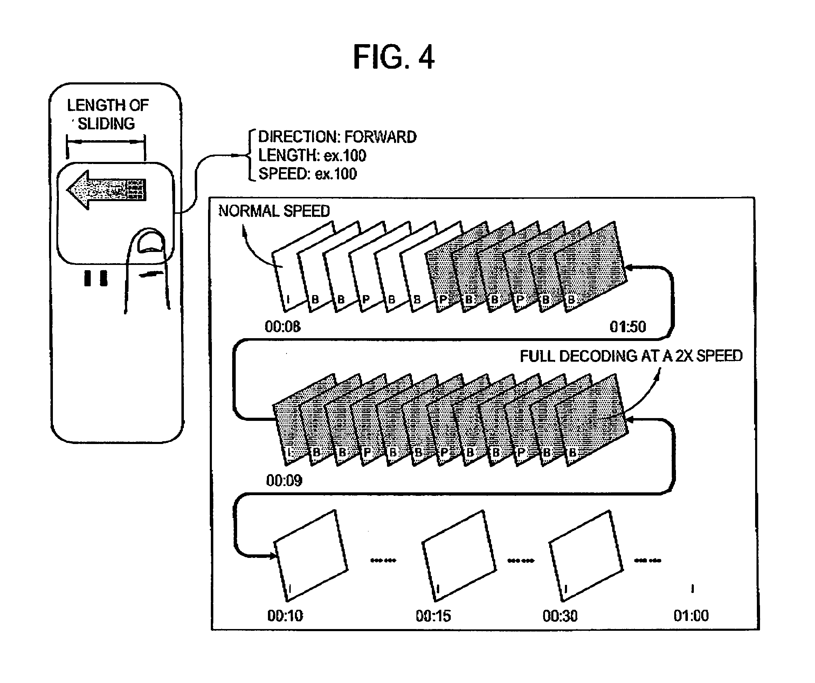

FIG. 4 illustrates a video frame sequence in a fast rewind mode with damping effect of the method for video localization which is executable by using the electronic apparatus based on touch control, according to an exemplary embodiment. The implementation of a fast rewind mode with damping effect according to an exemplary embodiment is similar to the implementation of the fast forward mode with damping effect as described above. The implementation of the fast rewind mode with damping effect according to an exemplary embodiment performs a procedure of reverse full decoding of a GOP. As illustrated in FIG. 4, the first time points of first, second, third, and fourth keyframes are 01:00, 00:30, 00:15, and 00:10 respectively, and 16 frames (illustrated in shadow) from the time point of 00:09 are fully decoded at a speed of two times of normal speed (i.e., a 2x speed). After this, frames are decoded at normal speed. In this manner, a fast rewind operation with damping effect can be achieved.

It should be noted, in case that the decoder 140 is unable to perform a full decoding operation in fast rewind due to the limit of organization of GOP, or if the frame buffer controller 150 cannot store all data of the decoded GOP, it may be necessary to check the size of a current GOP each time the frame-by-frame rewind operation is performed. The size may be checked by using the following Equation 9:

$$[60] \quad (Icount+Pcount+1)*Iresolution<FrameBufferSize \quad \text{Equation 9}$$

Equation 9 specifies a minimum size of memory of the frame buffer controller 150. Icount denotes the number of I frames in a GOP, and Pcount denotes the number of predicted (P) frames in the GOP, and '1' denotes the number of bidirectionally predicted (B) frames. Iresolution denotes the resolution of I frame, and FrameBufferSize denotes the memory size of frame buffer controller 150. For High Definition (HD) video, the size of each frame is 1952*1088*1.5=3.04MB. If the HD video is encoded in H.264 format, the number of P frames is generally less than 20. Accordingly, the memory size of frame buffer is at least 22*3.04=66.88MB.

In order to ensure smoothness in a frame-by-frame rewind operation with respect to a GOP, there must be a sufficient number of buffered I frames in the frame buffer controller 150 before entering the full decoding mode with respect to the GOP. The sequence of decoding is arranged on the premise that the last frame of the GOP is decoded with the least cost.

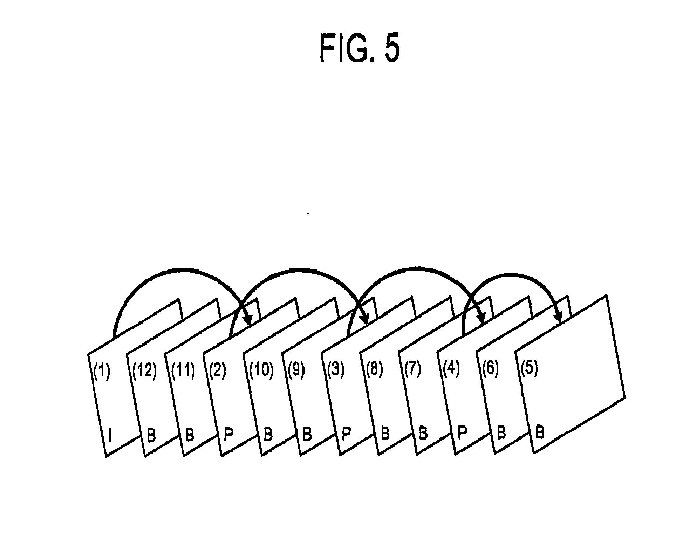

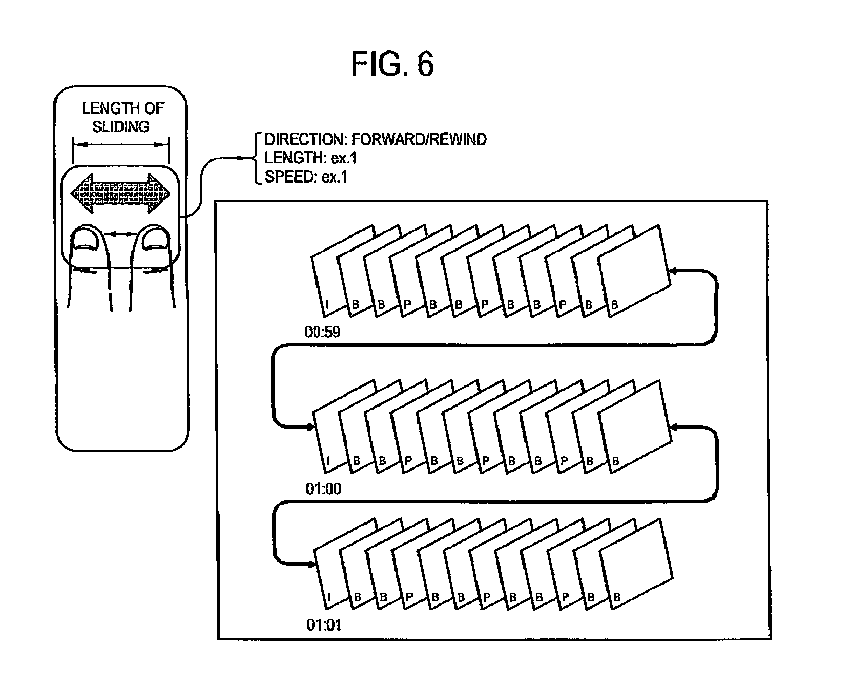

FIG. 5 illustrates a frame sequence of a Group of Pictures (GOP) in a reverse full decoding mode, according to an exemplary embodiment. As illustrated in FIG. 6, the I frame is firstly decoded, and then all of the P frames are sequentially decoded, and all of the B frames are decoded in a reverse order. If the memory size of the frame buffer controller 150 does not satisfy the requirement as expressed in Equation 9, video frames are decoded as much as possible. Referring to FIG. 6 as an example, one possible solution is decoding frames (1), (2) and (3) of FIG.5, and starting decoding from frame (3) in a reverse order.

Hereinafter, a video localization process for performing a frame-by-frame searching mode which is executable by using a video localization device according to an exemplary embodiment will be described with reference to FIGS. 6, 7, and 8.

FIG. 6 illustrates a frame sequence in the frame-by-frame searching mode. Video frames of time points of 00: 59, 01:00 and 01:01 in the frame-by-frame searching mode are illustrated. The frame-by-frame mode is required for high system performance, and in an exemplary embodiment, the video localization device operates in a free mode, in which decoding and displaying of video frames do not depend on comparison of PTS and System Time Clock (STC). In order to resolve a problem of an inability to reliably predict a searching direction, the following rule is provided: when the frames are moved one by one in a particular direction, there must be at least five successive frames pre-stored in the frame buffer controller 150. If no more than five frames are stored, the pusher 130 and the decoder 140 start to generate frame data. The generation of frame data may refer to the manner of generating frame data in full decoding mode with respect to a fast rewind operation.

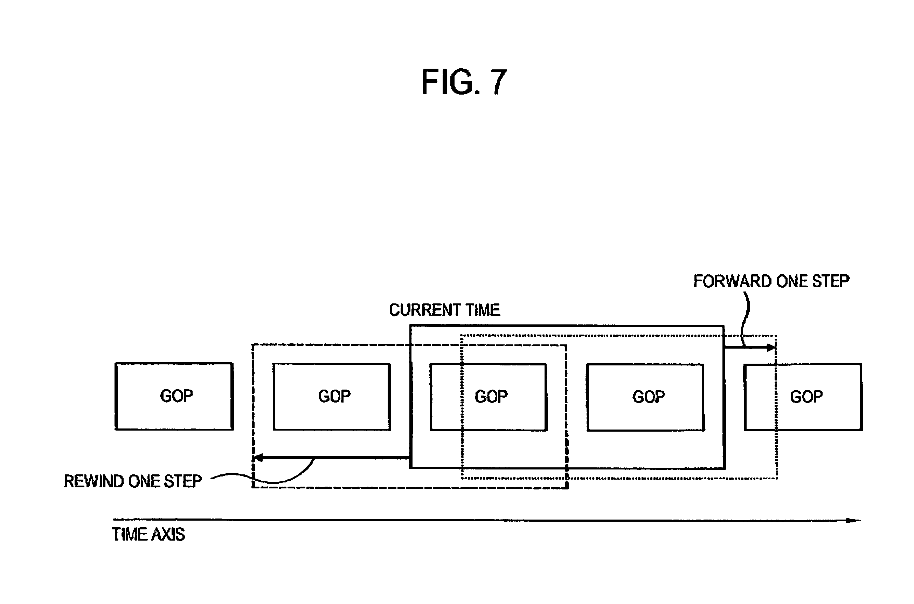

The rule of frame substitution in the frame buffer controller 150 is illustrated with reference to FIG. 7. Assuming that the frame buffer controller 150 is able to store data of two GOPs, and the PTS of a current frame is located at the middle of all the frames (that is, the condition for triggering the pusher 130 and decoder 140 is not satisfied), the frame buffer controller 150 pushes data of one video frame that is already in the buffer to the renderer 170. If the condition is triggered, two modes are considered. First, in a forward mode, the number of frames to be stored in the frame buffer controller 150 is set as a fixed value, for example, 4 frames (e.g., IBBP), 7 frames (e.g., IBBPBBP), or any other suitable fixed value. These values are experiential values and may be determined based on the organization of GOP, and a newly stored frame overwrites a frame that has the least PTS. In a rewind mode, the number of frames to be stored Is equal to the number of all frames in a GOP, and the newly stored frame overwrites the frame having the greatest PTS. In particular, a fixed step length is used in the forward mode, and a GOP is used as a unit in the rewind mode.

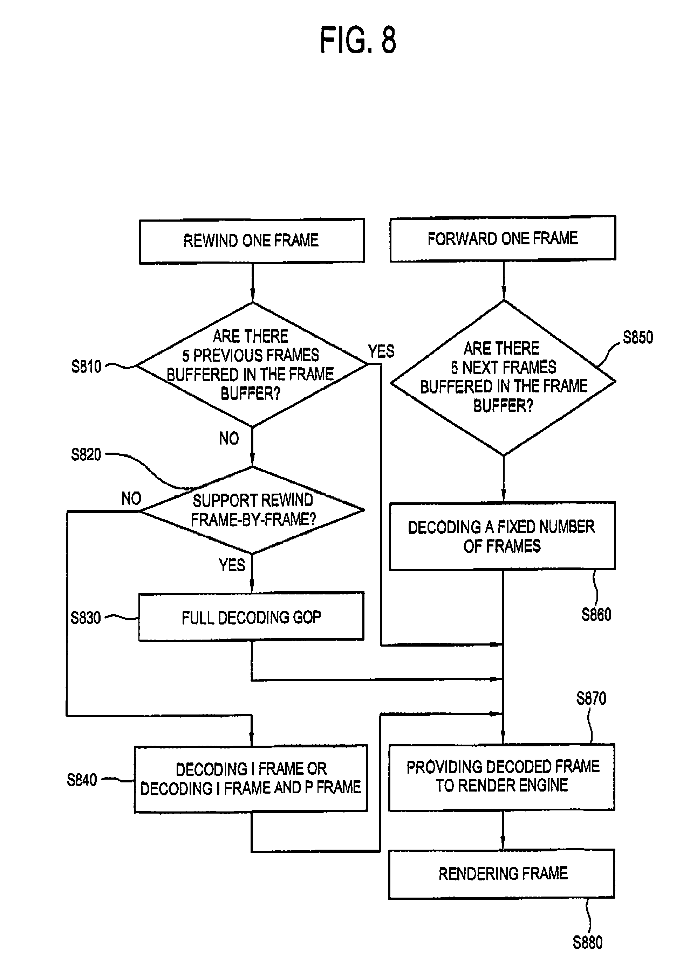

FIG. 8 illustrates a flowchart of the frame-by-frame mode of the method for video localization based on touch control, according to an exemplary embodiment. If the touch operation corresponds to a rewind of one frame, the controller 180 determines whether there are five previous frames stored in the frame buffer controller 150 in operation S810. If there are five previous frames, the procedure proceeds to operation S870, in which the frame buffer controller 150 provides data of one frame to the renderer 170, If it is determined in operation S810 that there are notfive previous frames in frame buffer controller 150, then in operation S820, the controller 180 determines whether the decoder 140 supports a full decoding mode of frame-by-frame rewind. If yes, then in operation S830, the decoder 140 performs full decoding on a GOP, and then the procedure proceeds to step S870 to provide the decoded frames to the renderer 170. If the decoder 140 does not support full decoding, then in operation S840, either only I frames are decoded or only I frames and P frames are decoded, and then the procedure proceeds to step S870 to provide the decoded frames to the renderer 170.

If the touch operation corresponds to a forwarding of one frame, the controller 180 determines whether there are five next frames stored in the frame buffer controller 150 in operation S850, and then the decoder 140 decodes a fixed number of video frames in operation S860. Next, the procedure proceeds to operation S870 to provide the decoded frames to the renderer 170. Finally,in operation S880, the video frames are rendered by the renderer 170.

According to the exemplary embodiments described above, a localization mode of video frame can be flexibly controlled, the step between frames in localization can be dynamically adjusted, and a frame-by-frame video searching can be achieved.

The foregoing exemplary embodiments and advantages are merely exemplary and are not to be construed as limiting the present inventive concept. The exemplary embodiments can be readily applied to other types of apparatuses. In addition, the description of the exemplary embodiments Is intended to be illustrative, and not to limit the scope of the claims, and many alternatives, modifications, and variations will be apparent to those skilled in the art.

## Claims

1. An electronic apparatus based on touch control, comprising:

    a touch sensor which is configured to receive a touch input from a user and to generate a touch signal based on the received touch input;
    a storage which is configured to store an index list which includes time information and offset information which relates to video frames of video frame data; and
    a controller which is configured to control to determine a video frame localization mode based on at least one of a touch velocity, a touch length, and a touch direction of the received touch input, to calculate time information which relates to a video frame to be displayed, to set a frame rate which relates to acquiring offset information which relates to the video frame to be displayed based on the calculated time information and the stored index list, and to decode the video frame based on the acquired offset information in order to display the decoded video frame based on the calculated time information and the setframe rate.

2. The electronic apparatus of claim 1, further comprising:

    a pusher which is configured to acquire the offset information of the video frame to be displayed based on the calculated time information and the stored index list, to read the video frame data based on the acquired offset information, and to push the read video frame data to a decoder;
    the decoder which is configured to maintain a buffer queue which includes the received video frame data, to decode the video frame data which is included in the buffer queue, and to push the decoded video frame data to a frame buffer controller, and

the frame buffer controller which is configured to store the decoded video frame data, and to determine a time for displaying a current video frame based on time information which relates to the current video frame and the setframe rate.

3. The electronic apparatus of claim 1, wherein the video frame localization mode comprises at least one of a fast forward mode with damping effect, a fast rewind mode with damping mode, and a frame-by-frame searching mode.

4. The electronic apparatus of claim 2, wherein the pusher is further configured to generate a respective push thread which relates to video frame data for each received touch input, and to selectively push the video frame data to the decoder.

5. The electronic apparatus of claim 2, wherein the decoder is further configured to selectively decode the video frame data which is received from the pusher.

6. The electronic apparatus of claim 2, wherein the frame buffer controller is further configured to filter video frame data which includes at least one temporal discontinuity.

7. The electronic apparatus of claim 1, wherein in a fast forward mode, the controller is further configured to set an operation mode of the electronic apparatus as a keyframe-only mode in which only keyframes from among a Group Of Pictures (GOP) are decoded, and when in the keyframe-only mode, the controller is further configured to set the frame rate as a fixed value, and to calculate a time point of a respective keyframe to be displayed on a screen according to Equations 1 and 2:

[Equation 1]

$$N = nTouchLength / nTouchVelocity \, ;$$

and

[Equation 2]

$$X_{n=1...N} = X_{n-1} + (N - n) \times nTouchVelocity \times nTouchWeight \, ,$$

wherein nTouchvelocity denotes the touch velocity, nTouchLength denotes the touch length, nTouchWeight denotes a weight which relates to adjusting a touch control, Xn=1...n denotes an nth time point, and X0 denotes an initial time point.

8. The electronic apparatus of claim 1, wherein in a fast forward mode, the controller is further configured to set an operation mode of the electronic apparatus as a full decoding mode in which all of the frames from among a Group of Pictures (GOP) are decoded, and to set the frame rate according to Equations 3 and 4:

[Equation 3]

$$StartRateFull_n = FR \times (1 + \frac{n}{N}) \, ;$$

and

$$[\text{Equation 4}]\ StartRateFull_n = 29.97*\left(1 + \frac{n}{N}\right)$$

$$EndRateFull_n = 29.97*\left(2 - \frac{n}{N}\right),$$

wherein StartRateFulln denotes a frame rate when a touch operation begins, EndRataFull$_n$ denotes a frame rate when the touch operation ends, FR denotes a frame rate of normal playback, and N denotes a number of frames which have a damping effect in a full decoding mode.

9.  The electronic apparatus of claim 2, wherein if the video frame localization mode is determined to include a frame-by-frame forwarding operation, the controller is further configured to set a number of frames to be stored by the frame buffer controller to a fixed value, and if the video frame localization mode is determined to include a frame-by-frame rewind operation, the controller is further configured to set the number of frames to be stored by the frame buffer controller based on a number of all frames in a Group of Pictures (GOP).

10.  The electronic apparatus of claim 2, wherein In a fast rewind mode, if the controller determines that Equation 5 is not satisfied, the controller Is further configured to control the decoder to decode as many video frames in a Group of Pictures (GOP) as possible, wherein Equation 5 is expressed as follows:

[Equation 5]

(Icount+Pcount+1)*Iresolution<FrameBufferSize,

wherein Icount denotes a number of intra-coded (I) frames in a GOP, and Pcount denotes a number of predicted (P) frames in the GOP, and '1' denotes a bidirectionally predicted (B) frame, Iresolution denotes a resolution of an I frame, and FrameBufferSize denotes a memory size of the frame buffer controller.

11.  A control method which is executable by using an electronic apparatus based on touch control, comprising:

(a) receiving a touch input from a user and generating a touch signal based on the received touch input;
(b) determining a video frame localization mode based on at least one of a touch velocity, a touch length, and a touch direction of the received touch input, and calculating time information which relates to a video frame to be displayed and setting a frame rate;
(c) acquiring offset information which relates to the video frame based on an index list, reading video frame data based on the acquired offset information, and pushing the read video frame data to a buffer;
(d) maintaining, in the buffer, a buffer queue which includes the received video frame data and decoding the video frame data which is included in the buffer queue; and
(e) storing the decoded video frame data and determining a time for displaying a current video frame based on time information which relates to the current video frame and the set frame rate.

12.  The control method of claim 11, wherein the video frame localization mode comprises at least one of a fast forward mode with damping effect, a fast rewind mode with damping mode, and a frame-by-frame searching mode.

13.  The control method of claim 11, wherein: in operation (c), a respective push thread which relates to video frame data is generated for each received touch input, and the video frame data is selectively pushed to a decoder.

14.  The control method of claim 11, wherein: in operation (d), the video frame data pushed in operation (c) is selectively decoded.

15.  The control method of claim 11, wherein operation (e) includes filtering video frame data which includes at least one temporal discontinuity.

# FIG. 1

EP 2 687 969 A2

# FIG. 2

START

S210 — DETERMINING THAT A FAST FORWARD
OPERATION IS TO BE PERFORMED

S220 — CALCULATING TIME POINT OF A VIDEO FRAME
TO BE DISPLAYED

S230 — ACQUIRING OFFSET, READING THE VIDEO FRAME
AND PUSHES THE FRAME TO DECODER

S240 — DECODING THE VIDEO FRAME DATA, AND
BUFFERING THE DECODED DATA

S250 — DETERMINING TIME TO DISPLAY CURRENT
VIDEO FRAME

END

# FIG. 3

LENGTH OF SLIDING

DIRECTION: FORWARD
LENGTH: ex.100
SPEED: ex.100

01:00    01:30    01:45    01:50

FULL DECODING AT A 2X SPEED

I B B P B B P B B P B B

01:51

NORMAL SPEED

I B B P B B P B B P B B

# FIG. 4

LENGTH OF SLIDING

DIRECTION: FORWARD
LENGTH: ex.100
SPEED: ex.100

NORMAL SPEED

00:08                    01:50

FULL DECODING AT A 2X SPEED

00:09

00:10        00:15        00:30        01:00

EP 2 687 969 A2

# FIG. 5

# FIG. 6

LENGTH OF
SLIDING

DIRECTION: FORWARD/REWIND
LENGTH: ex.1
SPEED: ex.1

00:59

01:00

01:01

EP 2 687 969 A2

# FIG. 7

FORWARD ONE STEP

CURRENT TIME

GOP    GOP    GOP    GOP    GOP

REWIND ONE STEP

TIME AXIS

# FIG. 8

```
        REWIND ONE FRAME                    FORWARD ONE FRAME


                ARE THERE                          ARE THERE
            5 PREVIOUS FRAMES          YES        5 NEXT FRAMES          S850
   S810    BUFFERED IN THE FRAME            BUFFERED IN THE FRAME
                 BUFFER?                          BUFFER?

                   NO
   S820
             SUPPORT REWIND                DECODING A FIXED NUMBER
      NO     FRAME-BY-FRAME?                     OF FRAMES

                   YES
                                                                        S860

   S830     FULL DECODING GOP

                                                                        S870

   S840    DECODING I FRAME OR           PROVIDING DECODED FRAME
         DECODING I FRAME AND P FRAME        TO RENDER ENGINE


                                              RENDERING FRAME


                                                                        S880
```

20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201210246583X
- KR 1020130058380